# EUROPÄISCHE PATENTSCHRIFT

(11) **EP 0 622 254 B1**
(45) Veröffentlichungstag und Bekanntmachung des Hinweises auf die Patenterteilung: **25.09.1996**
(21) Anmeldenummer: 94104269.9
(22) Anmeldetag: 18.03.1994
(51) Int. Cl.: B60G 7/02, B60G 11/10

(54) **Lenkerstrebe für Radachsen von Nutzfahrzeugen**
Suspension arm for axles of industrial vehicles
Bras de suspension pour essieux de véhicules utilitaires

(30) Priorität: 26.04.1993 DE 9306266 U
(43) Veröffentlichungstag der Anmeldung: 02.11.1994
(73) Patentinhaber: Trenkamp & Gehle GmbH, D-49413 Dinklage (DE)
(72) Erfinder: Gehle, Konrad, D-49408 Dinklage (DE)
(74) Vertreter: Busse & Busse Patentanwälte

(56) Entgegenhaltungen:
- DE-C- 555 144
- FR-A- 2 675 434
- US-A- 1 931 945

## Beschreibung

Die Erfindung betrifft eine Lenkerstrebe aus Metall für Radachsen von Nutzfahrzeugen, insbesondere Lastkraftwagen und gezogenen oder aufgesattelten -anhängern, mit einem freien, als Lenkerauge ausgebildeten Ende, das, in Einbaustellung der Lenkerstrebe, auf einem in zwei Seitenwangen eines fahrgestellseitigen Lagerbockes gehaltenen Lagerbolzen schwenkbeweglich abgestützt ist.

Derartige Lenkerstreben werden üblicherweise im Bereich der beiden Enden der Radachse als in Fahrzeuglängsrichtung verlaufende Lenkereinheiten verwendet, die in einem vom Lenkerauge ausgehenden Strebenteil mit der Radachse verbunden sind und darüber hinaus in einem dem Lenkerauge entgegengesetzten Endbereich mit einer Achsfedereinheit, z.B. einer Luftfedereinheit, verbunden sein können.

Im Fahrbetrieb sind diese Lenkerstreben bzw. Längslenker erheblichen Kippbewegungen um eine Querachse des Lagerbolzens ausgesetzt, die insbesondere durch Neigungen des Fahrgestells bei Kurvenfahrten hervorgerufen werden. Hierbei kommt es zu einem Reibeingriff unter Last der, wie üblich, in einer zur Längsachse des Lenkerauges senkrechten Ebene liegenden ringförmigen Seitenflächen des Lagerauges mit den Innenseiten der angrenzenden Seitenwangen des Lagerbockes, mit der Folge, daß hierdurch unerwünschte Torsionsmomente als überlagerte Kräfte in die Lenkerstrebe eingetragen werden. Dies beansprucht das Material der Lenkerstrebe sowie deren Verbindungsteile mit der Radachse und führt zu einem hohen Verschleiß der Seitenflächen des Lenkerauges und der angrenzenden Innenflächenteile des Lagerbockes.

US-A-1 931 945 beschreibt eine Lenkerstrebe aus Metall für Radachsen von Fahrzeugen mit einem freien, als Lenkerauge ausgebildeten Ende, das, in Einbaustellung der Lenkerstrebe, auf einem in zwei Seitenwangen eines fahrgestellseitigen Lagerbockes gehaltenen Lagerbolzen schwenkbeweglich abgestützt ist, wobei die beiden der Innenseite der jeweils angrenzenden Seitenwange des Lagerbockes zugewandten ringförmigen Seitenflächen des Lenkerauges von ihrem Innenumfang zu ihrem Außenumfang durchgehend flächige Verjüngungen aufweisen. Dabei sind die durchgehend flächigen Verjüngungen der ringförmigen Seitenflächen des Lenkerauges um dieses rundum verlaufend ausgebildet, so daß die ringförmigen Seitenflächen in diesem Fall als konisch bezeichnet werden können. Die konische Verjüngung entsteht bei der bekannten Lenkerstrebe dadurch, daß das Lenkerauge in Formwerkzeugen in der Mitte zusammengepreßt wird, so daß sich die ringförmigen Seitenflächen durch Aufweitung des Lenkerauges an beiden Stirnenden nach außen stellen. Für den technischen Erfolg ist die Ausbildung der Stirnenden bzw. ringförmigen Seitenflächen des bekannten Lenkerauges ohne Bedeutung. Wesentlich für den in US-A-1 931 945 beschriebenen technischen Erfolg ist das Einpressen einer Gummihülse in das doppelt konische Lenkerauge, dessen Durchmesser sich von der Mitte aus zu den beiden Stirnenden fortschreitend erweitert. Die Stirnenden bzw. ringförmigen Seitenflächen des Lenkerauges kommen bei der bekannten Lenkerstrebe nicht in Anlage an den Innenseiten der angrenzenden Seitenwangen des Lagerbockes, da sich durch das Einpressen der Gummihülse in das Lenkerauge Gummimaterial radial nach außen zwischen die Seitenflächen des Lenkerauges und die angrenzende Seitenfläche der Seitenwangen des Lagerbockes schiebt.

Der Erfindung liegt die Aufgabe zugrunde, eine Lenkerstrebe aus Metall der eingangs angegebenen Art zu schaffen, bei der ein unerwünschter Reibeingriff der Seitenflächen des Lenkerauges mit den Innenflächen der Seitenwangen des Lagerbockes unter den genannten Bedingungen um die Querachsen der Lenkerbolzen vermieden wird.

Diese Aufgabe wird nach der Erfindung dadurch gelöst, daß das Lenkerauge einen sich in Verlängerung des Lenkerteils beidseits der kreisförmigen Augenöffnung erstreckenden Führungsbereich der Lenkerstrebe umfaßt, der von der Verjüngung freigehalten ist, und daß die durchgehend flächige Verjüngung nur in den segmentförmigen Bereichen oberhalb und unterhalb des Führungsbereiches vorgenommen ist. Nach der Erfindung ist demgemäß an den ringförmigen Seitenflächen des Lenkerauges keine durchgehend flächige rundum verlaufende oder konische Verjüngung vorhanden, sondern der mit den Innenseiten der angrenzenden Seitenwangen des Lagerbocks in Berührung kommende eigentliche Führungsbereich besitzt keine Verjüngung, so daß hier die Stirnflächen jeweils mit der zugehörigen Senkrechten zusammenfallen. Bei dieser Ausgestaltung wird durch die an den ringförmigen Seitenflächen des Lenkerauges etwa durch eine Abstanzung bzw. Anflächung vorgenommene Verjüngung mit einem Winkel von etwa 2 bis 10°, vorzugsweise 4 oder 5°, unter den üblichen Bedingungen des Fahrbetriebs insbesondere bei Neigungen des Fahrgestellrahmens bei Kurvenfahrten durch die dabei eintretende Kippbewegung des Lenkerauges um die mittlere senkrechte Querebene des Lagerbolzens eine Anlage bzw. ein Reibeingriff der ringförmigen Seitenflächen des Lenkerauges mit der jeweils angrenzenden Innenfläche der Seitenwange des Lagerbockes oberhalb bzw. unterhalb des Führungsbereichs dadurch vermieden, daß die ringförmige Seitenfläche des Lagerauges nicht in Normalstellung insgesamt in einer zur Innenfläche der Seitenwange des Lagerbockes parallelen Ebene verläuft, sondern erfindungsgemäß in den verjüngten segmentförmigen Bereichen oberhalb und unterhalb des Führungsbereichs um den vorgesehenen Verjüngungswinkel von der angrenzenden Innenfläche der Seitenwange nach innen, zur senkrechten mittleren Querebene des Lagerbolzens hin, zurückversetzt ist. Es treten somit unter den genannten Bedingungen des Fahrbetriebes deutlich geringere Torsionsmomente auf, womit die Haltbarkeit der Lenkerverbindung erhöht, die Qualität der Radachsenführung verbessert und der Verschleiß der zusammenwirkenden Bauteile wesentlich herabgesetzt wird.

Weitere Merkmale und Vorteile der Erfidnung ergeben sich aus den Ansprüchen und der nachstehenden Beschreibung in Verbindung mit der Zeichnung, in der ein Ausführungsbeispiel des Gegenstands der Erfindung veranschaulicht ist. In der Zeichnung zeigen:
- Fig. 1: eine Seitenansicht einer erfindungsgemäßen Lenkerstrebe in ihrem ein angeformtes Lenkerauge umfassenden Endbereich,
- Fig. 2: einen Schnitt nach der Linie II-II der Fig. 1,
- Fig. 3: eine Schnittdarstellung entsprechend Fig. 2, jedoch in gegenüber dieser verkleinertem Maßstab, eingebaut in einen fahrgestellseitigen Lagerbock, in einer normalen Betriebsstellung, und
- Fig. 4: eine Darstellung entsprechend Fig. 3, wobei jedoch die Lenkerstrebe um eine mittlere senkrechte Querebene des Lenkerauges gekippt ist.

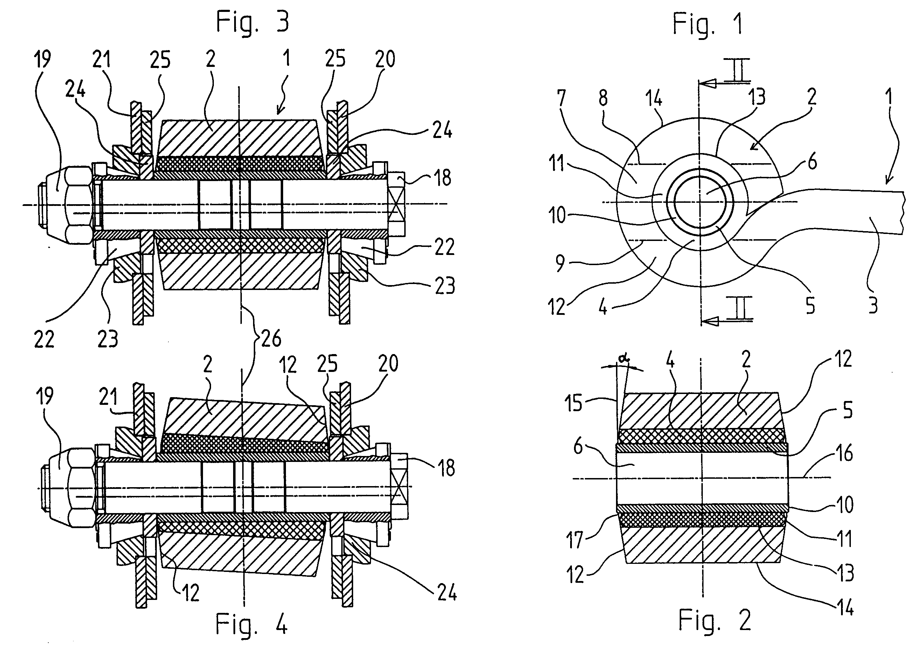

Wie zunächst aus den Fig. 1 und 2 ersichtlich ist, ist eine als Ganzes mit 1 bezeichnete Lenkerstrebe aus Metall für gelenkte und ungelenkte starre Radachsen von Nutzfahrzeugen, insbesondere gezogenen oder aufgesattelten LKW-Anhängern und LKWs, dargestellt, die an ihrem aus Fig. 1 ersichtlichen freien Ende als Lenkerauge 2 ausgebildet ist. Die Lenkerstrebe 1 ist bei dem dargestellten Beispiel von einem flachen Stahlband mit einer Dicke von etwa 12 bis 40 mm, vorzugsweise etwa 21 mm, gebildet. Das Lenkerauge 2 ist dabei von einem an das freie Ende des Stahlbandes angeformten Rollauge gebildet. Der flache Strebenteil 3, der sich an das Rollauge 2 anschließt, ist an der Radachse (nicht dargestellt) befestigt, um diese in Fahrzeuglängsrichtung zu führen.

Anstatt von einem flachen Stahlband kann die Lenkerstrebe 1 auch von einem nicht näher dargestellten Stahlprofilstab, zum Beispiel mit Vierkant- bzw. Rechteckprofil, gebildet sein, wobei dann das Lenkerauge 2 als gesondert hergestelltes Bauteil mit einem freien Ende des Profilstabs fest verbunden, insbesondere verschweißt wird.

Das kreisförmig ausgebildete Lenkerauge 2 ist mit seinem Innenumfang 13 auf einer Gummihülse 4 und diese wiederum mit ihrem Innenumfang auf dem Außenumfang einer Lagerhülse 5 aus Metall, zum Beispiel ebenfalls Stahl, abgestützt. Der eigentliche Führungsbereich 7 der Lenkerstrebe 1 erstreckt sich in Verlängerung des Lenkerteils 3 beidseits der von der Bohrung der Hülse 5 definierten kreisförmigen Augenöffnung 6 etwa bis zu einer den oberen und den unteren Kulminationsbereich des Außenumfangs der Gummihülse 4 enthaltenden jeweiligen Linie in zum Lenkerteil 3 paralleler Grundausrichtung. In Fig. 1 sind die beiden den Führungsbereich 7 zwischen sich begrenzenden Linien strichpunktiert dargestellt und mit 8 bzw. 9 bezeichnet.

Der Führungsbereich 7 erstreckt sich somit über die äußeren ringförmigen Stirnflächen 10 und 11 der Lagerhülse 5 bzw. der Gummihülse 4 und, weiter nach außen, die ringförmigen Seitenflächen 12 des Lenkerauges 2. In den segmentförmigen Bereichen oberhalb der Linie 8 und unterhalb der Linie 9 sind die beiden Seitenflächen 12 vom Innenumfang 13 zum Außenumfang 14 des Lenkerauges 2 durchgehend flächig, etwa mittels einer entsprechend fein bearbeiteten Abstanzung, nach oben bzw. unten verjüngt. Der Verjüngungswinkel α beträgt etwa 2 bis 10°, vorzugsweise 4°, gegenüber einer angrenzenden Senkrechten 15 zur Längsachse 16 des Lenkerauges 2. Von dieser Verjüngung ist der Führungsbereich 7 freigehalten; hier fallen die Stirnflächen 12 jeweils mit der zugehörigen Senkrechten 15 zusammen.

Die Stirnflächen 10 der Lagerhülse 5 besitzen wiederum eine senkrechte Ausrichtung zu ihrer mit der Längsachse 16 deckungsgleichen Längsachse, während die Stirnflächen 11 der Gummihülse 4 in der aus Fig. 2 ersichtlichen Normalstellung innerhalb einer die Seitenflächen 12 des Lenkerauges 2 zur Lagerhülse 5 hin verlängernden ringförmigen Hüllfläche 17 liegen.

In der aus Fig. 3 ersichtlichen Einbaustellung ist die Lenkerstrebe 1 mit ihrem Lenkerauge 2 auf einem Lagerbolzen 18 schwenkbeweglich und über die Lagerhülse 5 mit der zwischengelegten Gummihülse 4 elastisch federnd abgestützt. Der Lagerbolzen 18, mit an einem Ende außen aufgeschraubter Sicherungsmutter 19, ist in zwei entsprechend quer zur Fahrtrichtung beabstandeten Seitenwangen 20 und 21 eines am Fahrgestell befestigten Lagerbockes festgelegt. Hierzu ist der Lagerbolzen 18 bei dem dargestellten Beispiel an seinen beiden außerhalb der Seitenwangen 20, 21 liegenden Enden mit je einer konischen Exzenterbuchse 22 versehen und mit diesen in außen an die Seitenwangen 20, 21 angeschweißte konische Buchsen 23 eingesetzt und gegen diese verspannt. Durch Lösen der Verspannung und Verdrehen der konischen Exzenterbuchsen 22 in den Buchsen 23 läßt sich eine Exzenterverstellung des Lagerbolzens 18 und damit der Lenkerstrebe 1 beispielsweise zur Ein- bzw. Nachstellung der zugehörigen Radachse herbeiführen, wie es an sich bekannt ist. Zwischen die Innenseite der konischen Buchsen 23 und die jeweils angrenzende ringförmige Stirnfläche 10 der Lagerhülse 5 ist eine Zwischenscheibe 24 gesetzt, die jeweils an der Stirnfläche 10 mit ihrer parallel zu dieser ausgerichteten Innenfläche im Einbauzustand der Lenkerstrebe 1 anliegt.

Die Zwischenscheiben 24 sind außenumfangsseitig jeweils von einer Anlaufscheibe 25 übergriffen, die einen entsprechenden Ringbereich der Innenfläche der Seitenwangen 20, 21 abdecken und mit diesen in nicht näher dargestellter Weise verbunden, z.B. verschraubt sind.

Im normalen Betriebszustand, wie er etwa bei Geradeausfahrt des Fahrzeugs auf ebener Fahrbahn gegeben ist, ist die Lenkerstrebe 1 mit ihrem Lenkerauge 2 im wesentlichen horizontal beidseits einer vertikalen mittleren Querebene 26 des Lagerbolzens 18 ausgerichtet, wie dies aus Fig. 3 ersichtlich ist. Bei Kurvenfahrten tritt eine Kippbewegung der Lenkerstrebe 1 mit ihrem Lenkerauge 2 um die vertikale Querebene 26 zu der einen oder der anderen Seite je nach der Neigung des Fahrgestells ein, wie es in Fig. 4 mit einer Neigung des Federauges 2 zur Seitenwange 20 des Lagerbockes hin gezeigt ist. Ersichtlich kommen dabei die Seitenflächen 12 des Lenkerauges 2 nicht mit den Innenflächen der Seitenwangen 20, 21 bzw. der diesen innenseitig vorgelagerten Anlaufscheiben 25 in Anlage bzw. Reibeingriff, noch mit den Innenflächen der angrenzenden Zwischenscheiben 24 unter dem Einfluß der unter Last in diesem Angrenzungsbereich wechselweise endseitig oberhalb und unterhalb des Lagerbolzens 18 komprimierten Gummihülse 4. Es treten somit nur noch unbedeutende Torsionsspannungen in der Lenkerstrebe 1 auf, wie auch der Verschleiß an den an das Lenkerauge 2 angrenzenden Teilen, nämlich den Anlaufscheiben 25, wesentlich herabgesetzt wird, so daß insbesondere letztere weitgehend entlastet sind und u.U. entbehrlich werden können.

## Patentansprüche

1. Lenkerstrebe (1) aus Metall für Radachsen von Nutzfahrzeugen, insbesondere Lastkraftwagen und gezogenen oder aufgesattelten -anhängern, mit einem freien, als Lenkerauge (2) ausgebildeten Ende, das, in Einbaustellung der Lenkerstrebe (1), auf einem in zwei Seitenwangen (20,21) eines fahrgestellseitigen Lagerbockes gehaltenen Lagerbolzen (18) schwenkbeweglich abgestützt ist, wobei die beiden der Innenseite der jeweils angrenzenden Seitenwange (20,21) des Lagerbockes zugewandten ringförmigen Seitenflächen (12) des Lenkerauges (2) von ihrem Innenumfang (13) zu ihrem Außenumfang (14) durchgehend flächige Verjüngungen aufweisen, **dadurch gekennzeichnet**, daß das Lenkerauge (2) einen sich in Verlängerung des Lenkerteils (3) beidseits der kreisförmigen Augenöffnung (6) erstreckenden Führungsbereich (7) der Lenkerstrebe (1) umfaßt, der von der Verjüngung freigehalten ist, und daß die durchgehend flächige Verjüngung nur in den segmentförmigen Bereichen oberhalb und unterhalb des Führungsbereiches (7) vorgenommen ist.

2. Lenkerstrebe nach Anspruch 1, dadurch gekennzeichnet, daß der Verjüngungswinkel (α) gegenüber einer Senkrechten (15) zur Längsachse (16) des Lenkerauges (2) im Bereich von 3 bis 10° liegt.

3. Lenkerstrebe nach Anspruch 1 oder 2, dadurch gekennzeichnet, daß sie aus flachem Stahlband besteht und das Lenkerauge (2) von einem an ein freies Ende des Stahlbandes angeformten Rollauge gebildet ist.

4. Lenkerstrebe nach Anspruch 3, dadurch gekennzeichnet, daß die Dicke des Stahlbandes 10 bis 40 mm beträgt.

5. Lenkerstrebe nach Anspruch 1 oder 2, dadurch gekennzeichnet, daß sie von einem Stahlprofilstab gebildet und das Lenkerauge (2) als gesondert hergestelltes Bauteil mit einem freien Ende des Profilstabs fest verbunden, insbesondere verschweißt ist.

6. Lenkerstrebe nach einem der Ansprüche 1 bis 5, dadurch gekennzeichnet, daß das Lenkerauge (2) mit seinen Innenumfang (13) auf einer Gummihülse (4) und diese wiederum auf einer den Lagerbolzen (18) umschließenden Lagerhülse (5) aus Metall abgestützt ist.

7. Lenkerstrebe nach Anspruch 6, dadurch gekennzeichnet, daß die Lagerhülse (5) senkrecht zu ihrer Längsachse (16) verlaufende ringförmige Stirnflächen (10) für eine Anlage an parallel zu diesen ausgerichteten Innenflächen von Zwischenscheiben (24) des Lagerbockes aufweist.

8. Lenkerstrebe nach Anspruch 6 oder 7, dadurch gekennzeichnet, daß die ringförmigen Stirnflächen (11) der Gummihülse (4) in Normalstellung innerhalb einer die Seitenflächen (12) des Lenkerauges (2) zur Lagerhülse (5) hin verlängernden ringförmigen Hüllfläche (17) liegen.

## Claims

1. A suspension arm (1) of metal for axles of industrial vehicles, in particular lorries and towed or semi-mounted trailers with a free end constructed as a suspension lug (2) which, when the suspension arm (1) is installed, is supported for pivoting movement on a mounting bolt (18) supported in two side webs (20, 21) of a bearing block on the vehicle chassis, the two annular side faces (12) facing the inside of whichever is the adjacent side web (20, 21) of the bearing block having continuously tapering portions extending from their inner periphery (13) to their outer periphery (14), characterised in that the suspension lug (2) comprises a guide portion (7) of the suspension arm (1) which extends as a prolongation of the suspension part (3) on both sides of the circular opening (6) in the lug and which is kept free of the tapering and in that the continuous surface tapering occurs only in the segment-shaped areas above and below the guide portion (7).

2. A suspension arm according to claim 1, characterised in that the angle (α) of taper is in the range from 3 to 10° in respect of a perpendicular (5) to the longitudinal axis (16) of the suspensionn lug (2).

3. A suspension arm according to claim 1 or 2, characterised in that it consists of flat steel strip, the suspension lug (2) being formed by a ring integrally formed on a free end of the steel strip.

4. A suspension arm according to claim 3, characterised in that the thickness of the steel strip is 10 to 40 mm.

5. A suspension arm according to claim 1 or 2, characterised in that it consists of a profiled steel bar, the suspension lug (2) being a separately produced component which is rigidly connected, and is in particular welded, to a free end of the profiled bar.

6. A suspension arm according to one of claims 1 to 5, characterised in that the suspension lug (2) has its inner periphery (13) supported on a rubber sleeve (4), this in turn being supported on a metal bearing sleeve (5) enclosing the bearing bolt (18).

7. A suspension arm according to claim 6, characterised in that the bearing sleeve (5) comprises, extending at right-angles to its longitudinal axis (16), annular end faces (10) for bearing on inside faces orientated parallel therewith and being provided on intermediate discs (24) in the bearing block.

8. A suspension arm according to claim 6 or 7, characterised in that, in the normal position, the annular end faces (11) of the rubber sleeve (4) are situated inside an annular enveloping surface (17) which extends the lateral surfaces (12) of the clearing lug (2) towards the bearing sleeve (5).

## Revendications

1. Bras de suspension (1) en métal pour essieux de véhicules utilitaires, en particulier pour camions et remorques tirées ou semi-portées, comprenant une extrémité libre ayant la forme d'un oeil d'extrémité (2) qui, dans la position installée du bras de suspension (1), prend appui de manière à pouvoir pivoter sur un pivot (18) maintenu dans deux joues latérales (20, 21) d'un support côté châssis, étant entendu que les deux faces latérales annulaires (12) de l'oeil d'extrémité (2) tournées vers la face intérieure des joues latérales adjacentes (20, 21) du support présentent des rétrécissements surfaciques continus allant de leur périphérie intérieure (13) à leur périphérie extérieure (14), caractérisé en ce que l'oeil d'extrémité (2) comprend une zone de guidage (7) du bras de suspension (1) s'étendant dans le prolongement de la partie (3) du bras de suspension, des deux côtés de l'ouverture circulaire (6) de l'oeil, ladite zone de guidage étant exempte de rétrécissement, et en ce que le rétrécissement surfacique continu n'est prévu que dans les zones segmentaires situées au-dessus et en dessous de la zone de guidage (7).

2. Bras de suspension suivant la revendication 1, caractérisé en ce que l'angle de rétrécissement (α) à l'égard d'une perpendiculaire à l'axe longitudinal (16) de l'oeil d'extrémité (2) vaut entre 3 et 10°.

3. Bras de suspension suivant l'une ou l'autre des revendications 1 et 2, caractérisé en ce qu'il se compose d'une bande d'acier plate et en ce que l'oeil d'extrémité (2) se compose d'un oeil de roulis formé à une extrémité de la bande d'acier.

4. Bras de suspension suivant la revendication 3, caractérisé en ce que l'épaisseur de la bande d'acier est comprise entre 10 et 40 mm.

5. Bras de suspension suivant l'une ou l'autre des revendications 1 et 2, caractérisé en ce qu'il est formé d'une barre profilée en acier et en ce que l'oeil d'extrémité (2) est relié rigidement, en particulier soudé, en tant qu'élément fabriqué séparément, à une extrémité libre de la barre profilée.

6. Bras de suspension suivant l'une quelconque des revendications 1 à 5, caractérisé en ce que l'oeil d'extrémité (2) prend appui par sa périphérie intérieure (13) sur une douille en caoutchouc (4) qui, à son tour, prend appui sur une douille d'appui (5) en métal entourant le pivot (18).

7. Bras de suspension suivant la revendication 6, caractérisé en ce que la douille d'appui (5) présente, perpendiculairement à son axe longitudinal (16), des faces d'about annulaires (10) permettant une installation sur les surfaces intérieures de rondelles intercalaires (24) du palier orientées parallèlement à ces surfaces frontales annulaires.

8. Bras de suspension suivant l'une ou l'autre des revendications 6 et 7, caractérisé en ce que les faces d'about annulaires (11) de la douille en caoutchouc (4) sont situées, en position normale, à l'intérieur d'une surface enveloppante annulaire (17) prolongeant les surfaces latérales (12) de l'oeil d'extrémité (2) jusqu'à la douille d'appui (5).
